(19) Europäisches Patentamt European Patent Office Office européen des brevets

(11) **EP 2 151 401 A1**

(12) **EUROPEAN PATENT APPLICATION**
published in accordance with Art. 153(4) EPC

(43) Date of publication:
**10.02.2010 Bulletin 2010/06**

(51) Int Cl.:
**B65G 65/48** (2006.01)    **B65D 90/00** (2006.01)

(21) Application number: **08752602.6**

(22) Date of filing: **12.05.2008**

(86) International application number:
**PCT/JP2008/058722**

(87) International publication number:
**WO 2008/146593 (04.12.2008 Gazette 2008/49)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **25.05.2007  JP 2007138647**

(71) Applicants:
• **Shionogi&Co., Ltd.**
  **Osaka-shi**
  **Osaka 541-0045 (JP)**
• **Yoshikawa Corporation**
  **Satsumasendai-shi, Kagoshima 899-1924 (JP)**

(72) Inventors:
• **TOYODA, Toshitada**
  **Amagasaki-shi**
  **Hyogo 660-0813 (JP)**
• **INADA, Mitsuaki**
  **Amagasaki-shi**
  **Hyogo 660-0813 (JP)**
• **TOMODA, Yoshitaka**
  **Settsu-shi**
  **Osaka 566-0022 (JP)**

(74) Representative: **Müller-Boré & Partner
Patentanwälte
Grafinger Strasse 2
81671 München (DE)**

(54) **POWDER AND GRANULAR MATERIAL SUPPLY DEVICE**

(57)    The present invention provides a powder material supply device, wherein a powder and/or granular material supplied to an inner cylinder 4 is pushed outward through a gap G by rotation of a rotary blade 8 and discharged from an outlet 18, the outlet 18 being arranged to satisfy the relation of $L1 \geq G \times (1/\tan X°)$ (wherein $X°$ is an angle of response of the powder and/or granular material), with the shortest distance from the outer end of outlet 18 to a point directly below the inner circumference of the inner cylinder 4 on the bottom plate 2a being L1 (mm), and the dimension of the gap being G (mm). With such a powder material supply device, a fixed amount of powder and/or granular material mixing two or more kinds of powder and/or granular material can be supplied while suppressing a fluctuation in the content ratio.

Fig. 1

**EP 2 151 401 A1**

**Description**

TECHNICAL FIELD

The present invention relates to a powder material supply device. Specifically, the present invention relates to a powder material supply device suitable for supplying a powder and/or granular material containing two or more kinds of powder and/or granular material.

BACKGROUND ART

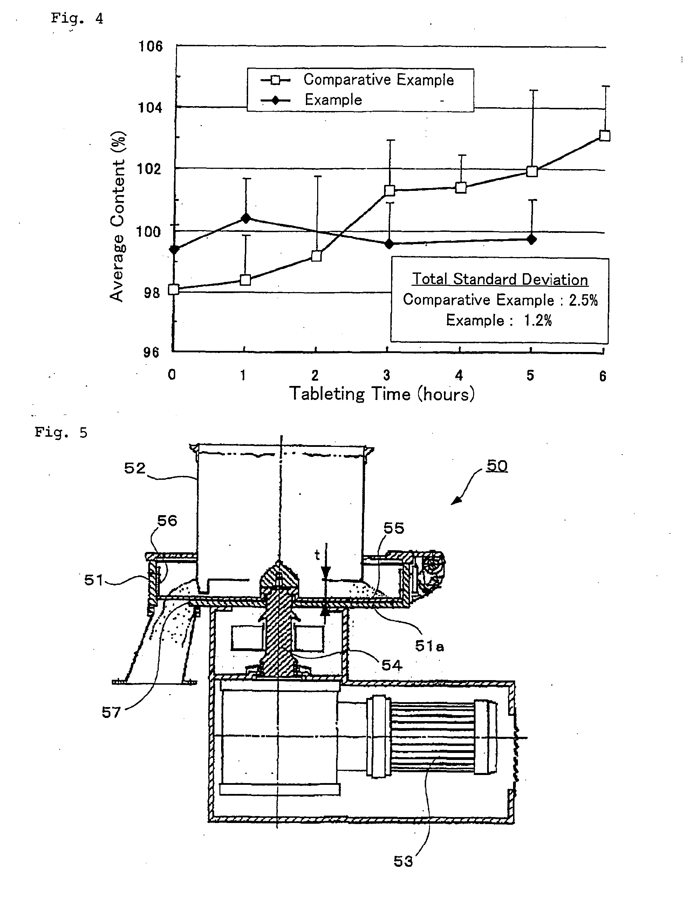

Patent Document 1 discloses an example of a known structure of a powder material supply device. As shown in Fig. 5, a powder material supply device 50 comprises an inner cylinder 52 concentrically disposed in an external cylinder 51 having a bottom plate 51a, wherein a gap t is formed between the upper surface of the bottom plate 51a and the bottom surface of the inner cylinder 52. A rotation shaft 54 that is rotated by a drive motor 53 is protrusively provided at the center of the bottom plate 51a, wherein the rotation shaft 54 has a plurality of rotary blades 55. Each rotary blade 55 extends to the outside along the upper surface of the bottom plate 51a through the gap t. A rotary ring 56 is provided at the end portion of each rotary blade 55 so as to fit the inner surface of the external cylinder 51. An outlet 57 is formed in the bottom plate 51a between the external cylinder 51 and the inner cylinder 52.

In this powder material supply device 50, the powder and/or granular material supplied in the inner cylinder 52 is pushed outside through the gap t by the rotation of the rotary blades 55, and then discharged from the outlet 57. The powder and/or granular material can thereby be supplied to a predetermined location at a fixed rate.

Patent Document 1: Japanese Unexamined Patent Publication No. 2001-278453

DISCLOSURE OF THE INVENTION

Technical Problem

In the above-described prior art powder material supply device 50, the powder and/or granular material stored in the inner cylinder 52 did not uniformly drop when discharged from the outlet 57, forming a locally concaved portion. Therefore, when the powder and/or granular material is a mixture of two or more kinds of powder and/or granular material, segregation of the powder and/or granular material occurs attributable to the difference in the particle size, bulk density, particle shape, etc., resulting in a fluctuation in the content ratio of the components of the discharged powder and/or granular material.

An object of the present invention is to provide a powder material supply device that can feed a powder and/or granular material containing two or more kinds of powder and/or granular material at a fixed rate while preventing a fluctuation in the content ratio of the powder and/or granular material.

Means for Solving the Problem

The object of the present invention can be achieved by a powder material supply device that comprises an external cylinder having a lower end covered with a bottom plate ; a rotary blade rotatably provided along the upper surface of the bottom plate; and an inner cylinder having a cylindrical shape supported in the external cylinder in such a manner that the axis thereof is substantially consistent with the rotation center of the rotary blade and have a gap from the bottom plate, wherein an outlet is formed in the bottom plate between the external cylinder and the inner cylinder. The powder material supply device is structured so that a powder and/or granular material supplied to the inner cylinder is pushed outside through the gap by rotation of the rotary blade and then discharged from the outlet, and the outlet is arranged so as to meet the formula below when the shortest distance from the outer end of the outlet to directly below the inner circumference of the inner cylinder on the bottom plate is defined as L1 (mm), and the dimension of the gap is defined as G (mm),

$$L1 \geq G \times (1/\tan X°)$$

wherein X° is the angle of repose of the powder and/or granular material.

The object of the present invention can be achieved by a powder material supply device that comprises an external cylinder having a lower end covered with a bottom plate; a rotary blade rotatably provided along the upper surface of the bottom plate; and an inner cylinder having a cylindrical shape supported in the external cylinder in such a manner that the axis thereof is substantially consistent with the rotation center of the rotary blade and have a gap from the bottom plate, wherein an outlet is formed in the bottom plate between the external cylinder and the inner cylinder. The powder material supply device is structured so that a powder and/or granular material supplied to the inner cylinder is pushed outside through the gap by the rotation of the rotary blade and then discharged from the outlet, and the outlet is arranged so that the shortest distance from the outer end of the outlet to directly below the inner circumference of the inner cylinder on the bottom plate is greater than the gap.

It is preferable that in the powder material supply device, the gap be formed substantially uniformly along the entire circumference of the inner cylinder.

It is possible to provide a cylindrical feeding can with a bottom that is invertedly and removably attached to the top end of the inner cylinder while holding the powder and/or granular material therein, wherein the feeding can has an inside diameter substantially the same as the inside diameter of the inner cylinder.

It is preferable that the powder material supply device be further provided with a conical guiding part disposed in the center of the inner cylinder on the bottom plate. In this case, the ratio of the diameter of the bottom surface of the guiding part to the inside diameter of the inner cylinder is 0.10 to 0.81. In this structure, it is preferable that the gradient angle of the conic surface of the guiding part relative to the bottom plate be 20 to 80°.

It is also preferable that the gap be 5 to 100 mm.

It is preferable that the inner cylinder have a reduced diameter in the outlet side of the lower end portion. Specifically, it is preferable that the outlet side of the lower end portion be inclined 1 to 20° toward the inner side.

EFFECT OF THE INVENTION

The powder material supply device of the present invention can supply a powder and/or granular material, which is a mixture of two or more kinds of powder and/or granular material, at a fixed rate while preventing a fluctuation in the content ratio of the components of the mixture.

BEST MODE FOR CARRYING OUT THE INVENTION

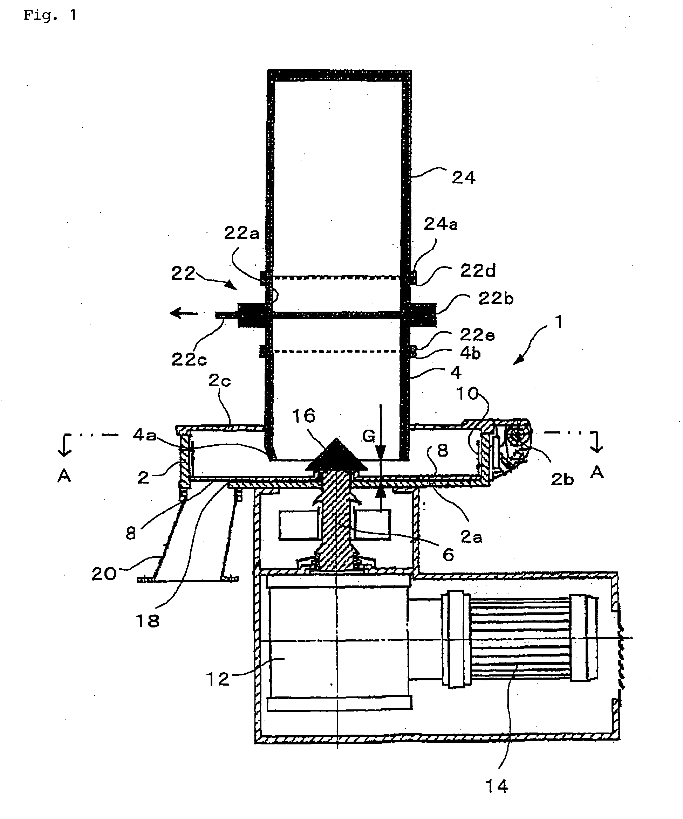

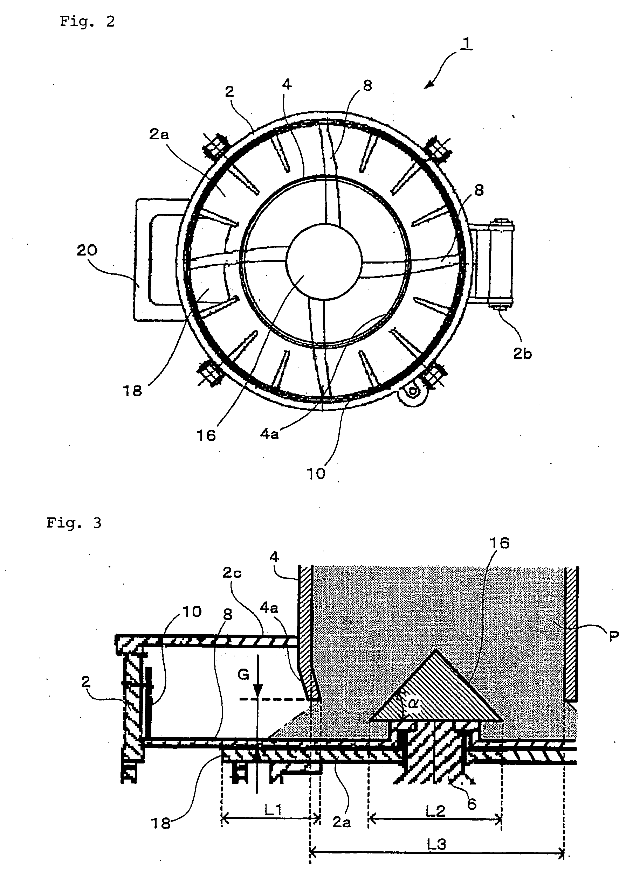

Embodiments of the present invention are explained below with reference to the attached drawings. Fig. 1 is a cross-sectional view schematically showing the structure of a powder material supply device according to one embodiment of the present invention. Fig. 2 is a cross-sectional view of the powder material supply device of Fig. 1 taken along the line A-A. The powder material supply device of the present embodiment can be obtained by partially improving the powder material supply device of Fig. 5.

As shown in Figs. 1 and 2, a powder material supply device 1 comprises an external cylinder 2 having a lower end covered with a bottom plate 2a, and an inner cylinder 4 arranged concentrically with the external cylinder 2 having a gap therebetween. The top end of the external cylinder 2 is covered with a covering part 2c openably/closably attached by a horizontal axis 2b. By inserting the inner cylinder 4 into an opening formed at the center of the covering part 2c, the lower part of the periphery of the inner cylinder 4 can be supported. A gap G is formed between the lower end of the inner cylinder 4 and the bottom plate 2a. In the present embodiment, the gap G is formed to have the substantially same size along the entire circumference of the inner cylinder 4. A diameter reduction part 4a is formed on the outlet 18 side lower end portion of the inner cylinder 4 so as to be inclined by 1 to 20° toward the inner radial direction.

A rotation shaft 6 protrudes from the center of the bottom plate 2a in such a manner that the rotation shaft 6 substantially coincides with the axis of the inner cylinder 4. The rotation shaft 6 is connected to a drive motor 14 via reduction gears 12. The rotational speed of the rotation shaft 6 can be controlled by a control device (not shown).

A plurality of rotary blades 8 are provided on the rotation shaft 6 in such a manner that the rotary blades 8 extend along the upper surface of the bottom plate 2a to the outside through the gap G. In the present embodiment, the rotary blades 8 are formed from four curvature components; however, there is no limitation to the number and the shape of the rotary blades 8 as long as they can push the powder and/or granular material outside through the gap G by rotation. A rotary ring 10 is provided on each of the end portions of the rotary blades 8 so as to connect the rotary blades 8 to each other along the inner surface of the external cylinder 2.

The rotation shaft 6 is connected to the drive motor 14 via the reduction gears 12. The rotation shaft 6 is structured so that the rotary blades 8 can be rotated at a desired speed. A conical guiding part 16 having a smooth conic surface is provided on the top end of the rotation shaft 6.

An outlet 18 is formed in the bottom plate 2a between the external cylinder 2 and the inner cylinder 4. A discharge chute (20) for feeding the powder and/or granular material to a supply destination is attached to the outlet 18.

An inverted feeding can 24 is detachably attached to the top end of the inner cylinder 4, via a slide damper 22. The slide damper 22 has a casing 22b that has an opening portion 22a and slidably holds a partition plate 22c, and the inner cylinder 4 can communicate with the feeding can 24 by sliding the partition plate 22c in the direction shown by the arrow. Either flange 22d or 22e is provided on one of the ends of the slide damper 22. Each of the flanges 22d and 22e contacts the flange 24a of the feeding can 24 or the flange 4b of the inner cylinder 4 and is fixed by a connecting means (not shown) such as a ferrule or a clamp.

In the present embodiment, the entire inner circumference of the feeding can 24, the opening portion 22a of the slide damper 22, and the entire inner circumference of the inner cylinder 4 have substantially the same inside diameter. However, it is possible to make the inside diameter of the opening portion 22a of the slide damper 22 slightly smaller than the inside diameter of the feeding can 24 and inner cylinder 4. It is also possible to make the inside diameter of the opening portion 22a of the slide damper 22 larger than the inside diameter of the feeding can 24 and inner cylinder 4. The connecting part for connecting the inner cylinder 4 with the feeding can 24 is not limited to the slide damper 22, and a choke valve, a butterfly damper, etc., may be used as long as they can detachably connect the inverted feeding can 24.

Fig. 3 is an expanded sectional view showing the principal parts of Fig. 1. As shown in Fig. 3, the outlet 18 is formed so that the shortest distance L1 from an arbitrary point at the outer end to the point directly below the inner circumference of inner cylinder 4 on the bottom plate 2a becomes greater than the gap G at that point.

The powder material supply device 1 having the above structure is used in the following manner. A slide damper 22 is attached to the opening of the feeding can 24 that contains a powder and/or granular material, the feeding can 24 is inverted with the partition plate 22c closed, and the slide damper 22 is then connected to the top end of the inner cylinder 4. When the partition plate 22c slides under these conditions, the powder and/or granular material held in the feeding can 24 falls into the inner cylinder 4 to be accommodated therein. The supply of the powder and/or granular material to the inner cylinder 4 may be conducted through the feeding can 24 as described above; however, the powder and/or granular material may also be supplied through a pipe from a storage tank for the powder and/or granular material by batch or continuous processing without using the feeding can 24. There is no limitation to the powder and/or granular material supplied to the inner cylinder 4. Preferable examples thereof include materials that contain two or more kinds of powder and/or granular material and are used for products to which content segregation may be problematic (for example, medicines, quasi drugs, health foods, foodstuffs, cosmetics, agricultural chemicals, fertilizers, etc.).

As shown in Fig. 3, the powder and/or granular material P held in the inner cylinder 4 spreads outside through the gap G with a specific angle of repose. In the present embodiment, the shortest distance L1, i.e., from the outer end of the outlet 18 to the point directly below thy inner circumference of the inner cylinder 4 on the bottom plate 2a, is greater than gap G. This structure prevents the powder and/or granular material P that has spread out after passing through the gap G from dropping from the outlet 18 without being controlled, if the powder and/or granular material has poor fluidity (an angle of repose of about 45°). In order to reliably prevent the discharge of the powder and/or granular material from the outlet 18, regardless of the fluidity of the powder and/or granular material, it is preferable that the shortest distance L1 be made longer than twice the length of the gap G.

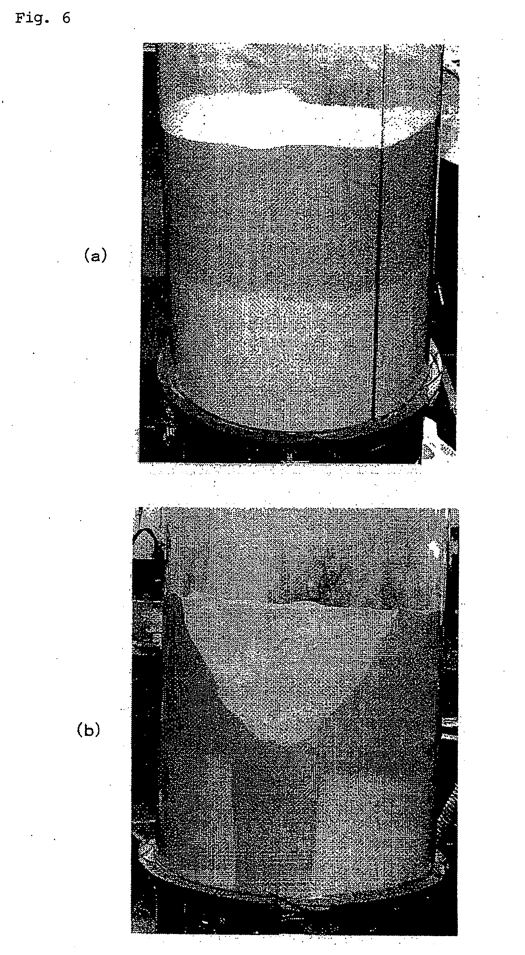

When the rotary blades 8 are rotated under such conditions, the powder and/or granular material stored in the inner cylinder 4 is pushed outwardly and the powder and/or granular material is discharged at a fixed rate from the outlet 18 through the discharge chute 20. As described above, by the specific arrangement of the outlet 18, the powder material supply device 1 of the present embodiment prevents the powder and/or granular material held in the inner cylinder 4 from being unintentionally discharged from the outlet 18 regardless of the rotation of the rotary blades 8. This prevents local reductions in the bulk of the powder and/or granular material in the inner cylinder 4 and achieves a mass flow (uniform drop) of the powder and/or granular material in the inner cylinder 4 as shown in Fig. 6(a). As a result, a fluctuation in the content ratio of the powder and/or granular material discharged from the outlet 18 can be prevented, when the powder and/or granular material is a mixture of two or more kinds of powder and/or granular material. If a mass flow cannot be achieved, a fluctuation in the content ratio of the powder and/or granular material occurs and results in a condition such as that shown in Fig. 6(b).

There is no limitation to the arrangement of the outlet 18 relative to the inner cylinder 4 as long as the above conditions can be met. However, if the distance from the inner cylinder 4 is unduly long, the diameters of the external cylinder 2 and the rotary blades 8 inevitably become large. This may increase the size of the device and the force necessary to drive the rotary blades 8. In order to reduce the size of the device, it is preferable that the diameter of the lower end of the inner cylinder 4, particularly the diameter of the outlet 18 side of the lower end of the inner cylinder 4 be made small as in the present embodiment. This allows the outlet 18 to be disposed further toward the inner side so that the diameter of the external cylinder 2 can be reduced.

In the present embodiment, the gap G is formed substantially uniformly around the entire circumference of the inner cylinder 4; therefore the area of the powder and/or granular material that spreads outside from the inner cylinder 4 can be reliably kept within the region of the outlet 18. This further ensures achieving the mass flow of the powder and/or granular material, and easily suppresses a content ratio fluctuation of the powder and/or granular material. It is preferable that the gap G be formed substantially uniformly along the entire circumference of the inner cylinder 4. However, even when the gap G is formed only approximately halfway around the circumference of the inner cylinder 4, a certain degree of effect can be attained by disposing the outlet 18 in the vicinity of the center of the area where the gap G is formed.

The outlet 18 of the present embodiment is formed so that the shortest distance L1 from the outer end to the point directly below the inner circumference of the inner cylinder 4 on the bottom plate 2a becomes larger than the dimension of the gap G in that location. This achieves excellent mass flow when an ordinary powder and/or granular material is discharged. In particular, with regard to a powder and/or granular material having an angle of repose of not less than 45°, the content uniformity can be reliably ensured by the mass flow during the supply of the powder and/or granular material. However, if the angle of repose of the powder and/or granular material used can be determined in advance, it is preferable that the outlet 18 be disposed at the location where the relationship between the shortest distance L1 (mm) and the gap G (mm) satisfies Math. 1. This also achieves a reliable mass flow.

$$[\text{Math. 1}]$$
$$L1 \geq G \times (1/\tan X°)$$

wherein X° is the angle of repose of the powder and/or granular material.

As described above, it is preferable that the gap between the lower end of the inner cylinder 4 and the bottom plate 2a be substantially constant; however, this is not an essential feature for the present invention. Specifically, if the shortest distance L1 from an arbitrary point at the outer end of the outlet 18 to the point directly below the inner circumference of the inner cylinder 4 on the bottom plate 2a is larger than the gap G at the point directly below the inner circumference of the inner cylinder 4, which is one end of the shortest distance L1, or if the relationship between L1 and G satisfies Math. 1 above, a mass flow of the powder and/or granular material inner side of the inner cylinder 4 can be obtained.

The dimension of the gap G can be suitably selected depending on the fluidity, angle of repose, output rate, etc., of the powder and/or granular material supplied to the inner cylinder 4. However, the dimension of the gap G is preferably 5 to 100 mm, more preferably 7 to 50 mm, and still more preferably 10 to 20 mm. In the present embodiment, the dimension of the gap G is set to 14.5 mm. If the gap G is too small, the discharge of the powder and/or granular material may become difficult. On the other hand, if the gap G is unduly large, a mass flow cannot be reliably obtained.

The guiding part 16 located at the center of the lower part of the inner cylinder 4 does not have a protrusion on a conic surface as in prior art structures, and uniformly guides the powder and/or granular material outward in a radial direction. Therefore, this structure also helps to reliably keep the range of the powder and/or granular material spread outside the inner cylinder 4 within the area of the outlet 18.

As shown in Fig. 3, if the ratio of the bottom surface diameter L2 of the guiding part 16 to the inside diameter L3 of the inner cylinder 4 (L2/L3) is too small, attaining a satisfactory effect for guiding the powder and/or granular material outward becomes difficult. However, if that ratio is too large, it becomes difficult to discharge the accommodated powder and granular material from its central portion. Accordingly, the ratio (L2/L3) is preferably 0.10 to 0.81, more preferably 0.15 to 0.64, and still more preferably 0.18 to 0.45.

If the gradient angle α of the conic surface of the guiding part 16 is too small, there is a risk that the powder and/or granular material remains on the conic surface of the guiding part 16. However, if the gradient angle α is too large, attaining a satisfactory effect for guiding the powder and/or granular material outward becomes difficult. Accordingly, taking the angle of repose of the powder and/or granular material into consideration, the gradient angle α is preferably 20 to 80°, more preferably 30 to 70°, and still more preferably 45 to 60°.

When the powder and/or granular material accommodated in the inner cylinder 4 is discharged to some extent, the feeding can 24 is removed and a new feeding can 24 containing powder and/or granular material is attached. In the present embodiment, the inside diameter of the feeding can 24 is made substantially the same as the inside diameter of the inner cylinder 4; therefore a mass flow can be maintained from the feeding can 24 to the inner cylinder 4.

For example, when the inside diameter of the inner cylinder 4, the diameter of the opening portion 22a of the slide damper 22, and the inside diameter of the feeding can 24 are all set to 309.5 mm, a mass flow of the powder and/or granular material was obtained in the feeding can 24. When the inside diameter of the inner cylinder 4 and the inside diameter of the feeding can 24 were set to 309.5 mm, and the diameter of the opening portion 22a of the slide damper 22 was set to 250 mm, a mass flow of the powder and/or granular material was also obtained in the feeding can 24.

In contrast, when a feeding can 24 having an inside diameter of 440 mm was connected to an inner cylinder 4 using a tapered tube having a taper angle of 60°, a recessed area was formed at the central portion of the powder and/or granular material accommodated in the feeding can 24 and the powder and/or granular material at this area was discharged first, failing to obtain a mass flow.

EXAMPLES

The present invention is explained in detail below with reference to examples.

Example 1

In the powder material supply device 1 shown in Figs. 1 to 3, the shortest distance L1 from the outer end of the outlet 18 to the inner cylinder 4 was made to be 17 mm, and the gap G was made to be 14.5 mm. In the guiding part 16, the conic surface had a gradient angle of 45°. The inside diameter of the inner cylinder 4 was made to be 309.5 mm, and the outlet 18 side lower end was inclined inside by 10° at a point 30 mm from the end to reduce the diameter of the inner cylinder 4. The inner cylinder and the slide damper, or the feeding can and the slide damper were fixed to each other using a ferrule, clamp, etc.

Using the ratio of the bottom surface diameter L2 of the guiding part 16 to the inside diameter L3 of the inner cylinder 4 (L2/L3) as a parameter, the effect on the mass flow was evaluated. When the ratio (L2/L3) was 0.18, 0.23, or 0.45, a mass flow was obtained. When the ratio (L2/L3) was 0.64, a slight recess was formed in the periphery of the stored powder and/or granular material, and when the ratio (L2/L3) became greater, such as 0.81 or 0.90, this recess became more remarkable. In contrast, when the ratio (L2/L3) was smaller than 0.10, the discharge of the powder and/or granular material became difficult, and no effect for providing the guiding part 16 was obtained.

Example 2

The ratio (L2/L3) of the powder material supply device 1 in Example 1 was set at 0.23. A powder and/or granular material containing additive A, additive B, additive C and granulated substance A as shown in Table 1 was placed in the powder material supply device 1.

[Table 1]

| Powder and/or granular material | General Name | Average Particle Diameter ($\mu$m) | Bulk Density (g/mL) | Content (%) |
|---|---|---|---|---|
| Additive A | Crystalline cellulose | Approx. 120 | Approx. 0.3 | 26.4 |
| Additive B | Anhydrous dibasic calcium phosphate | Approx. 40 | Approx. 0.8 | 39.6 |
| Additive C | Carmellose | Approx. 50 | Approx. 0.4 | 10 |
| Granulated Substance A | Granulated Substance | Approx. 100 | Approx. 0.6 | 24 |

The granulated substance A contained 1% of active ingredient per total weight of the preparation. The granulated substance was prepared by the following manner. Dry granules were obtained by using an agitation granulator and drying them with a fluidized-bed drying machine. The resulting dry granules were sieved with a mesh having openings of 250 $\mu$m, and oversize particles were ground with a sample mill. The thus-ground particles and the dry particles passed through the sieve were mixed in a bag. Necessary amounts of additives A, B and C were weighed and added to the above-obtained granulated substance A, and then mixed using a V-shaped mixer of 150 L.

The resulting mixture of powder and/or granular material was discharged at a fixed rate from the outlet 18 and then formed into tablets using a tableting machine (mass of tablet: 100 mg). The content of the drug in each tablet was measured and the change in the content of the drug with the passage of time was measured. Fig. 4 shows the results.

In Fig. 4, the content of the drug is shown by percentage with the desired amount defined as 100%. The content of the drug was measured every hour, and the average content of the drug in 10 tablets was plotted for each measurement. As is clear from Fig. 4, when the powder material supply device 1 of the present embodiment was used, the content of the drug remained almost 100% stable regardless of the passage of time. This indicates that content segregation was prevented.

The Comparative Example was conducted by supplying the powder and/or granular material from the feeding can without using the hopper of the present invention. As a result, there was a tendency for the content of the drug to increase with the passage of time.

The total standard deviations of the content of the drug in the Examples and Comparative Example were 1.2% and 2.5%, respectively. It was confirmed that fluctuations in the content of the drug in each tablet can be reduced in the Examples.

BRIEF DESCRIPTION OF THE DRAWINGS

Fig. 1 is a cross-sectional view schematically illustrating a powder material supply device according to one embodiment of the present invention.
Fig. 2 is a cross-sectional view of the powder material supply device of Fig. 1 taken along the line A-A.
Fig. 3 is an expanded sectional view of the principal parts of the powder material supply device of Fig. 1.
Fig. 4 shows the measurement results of the Examples of the present invention.
Fig. 5 is a cross-sectional view schematically illustrating a known powder material supply device.
Fig. 6 illustrates the effect of the present invention.

[Explanation of Reference Numerals]

| | |
|---|---|
| 1 | powder material supply device |
| 2 | external cylinder |
| 2a | bottom plate |
| 4 | inner cylinder |
| 4a | diameter reduction part |
| 6 | rotation shaft |
| 8 | rotary blade |
| 16 | guiding part |
| 18 | outlet |
| 22 | slide damper |
| 24 | feeding can |
| G | gap |

**Claims**

**1.** A powder material supply device comprising:

an external cylinder having a lower end covered with a bottom plate;
a rotary blade rotatably provided along the upper surface of the bottom plate; and
an inner cylinder having a cylindrical shape supported in the external cylinder in such a manner that the axis thereof is substantially consistent with the rotation center of the rotary blade and a gap is formed from the bottom plate;
an outlet being formed in the bottom plate between the external cylinder and the inner cylinder;
the powder material supply device being structured so that a powder and/or granular material supplied to the inner cylinder is pushed outside through the gap by rotation of the rotary blade and then discharged from the outlet; and
the outlet being arranged so as to meet the formula below when the shortest distance from the outer end of the outlet to a point directly below the inner circumference of the inner cylinder on the bottom plate is defined as L1 (mm), and the dimension of the gap is defined as G (mm);

$$L1 \geq G \times (1/\tan X°)$$

wherein X° is an angle of repose of the powder and granular material.

**2.** A powder material supply device comprising:

an external cylinder having a lower end covered with a bottom plate;
a rotary blade rotatably provided along the upper surface of the bottom plate; and
an inner cylinder having a cylindrical shape supported in the external cylinder in such a manner that the axis thereof is substantially consistent with the rotation center of the rotary blade and a gap is formed from the bottom plate;

an outlet being formed in the bottom plate between the external cylinder and the inner cylinder;

the powder material supply device being structured so that a powder and/or granular material supplied to the inner cylinder is pushed outside through the gap by rotation of the rotary blade and then discharged from the outlet; and

the outlet being arranged so that the shortest distance from the outer end of the outlet to a point directly below the inner circumference of the inner cylinder on the bottom plate is greater than the gap.

3. The powder material supply device according to claim 1 or 2, wherein the gap is formed substantially uniformly along the entire circumference of the inner cylinder.

4. The powder material supply device according to claim 1 or 2, which further comprises a cylindrical feeding can with a bottom that holds the powder and/or granular material, and that is invertedly and removably attached to the top end of the inner cylinder, wherein the feeding can has an inside diameter substantially the same as the inside diameter of the inner cylinder.

5. The powder material supply device according to claim 1 or 2, which further comprises a conical guiding part disposed in the center of the inner cylinder on the bottom plate;

wherein the ratio of the diameter of the bottom surface of the guiding part to the inside diameter of the inner cylinder is 0.10 to 0.81.

6. The powder material supply device according to claim 5, wherein the gradient angle of the conic surface of the guiding part relative to the bottom plate is 20 to 80°.

7. The powder material supply device according to claim 1 or 2, wherein the gap is 5 to 100 mm.

8. The powder material supply device according to claim 1 or 2, wherein the inner cylinder has a reduced diameter in the outlet side of the lower end portion.

Fig. 1

Fig. 2

Fig. 3

Fig. 4

Fig. 5

Fig. 6

(a)

(b)

## INTERNATIONAL SEARCH REPORT

| | International application No. |
|---|---|
| | PCT/JP2008/058722 |

A.  CLASSIFICATION OF SUBJECT MATTER
*B65G65/48(2006.01)i, B65D90/00(2006.01)i*

According to International Patent Classification (IPC) or to both national classification and IPC

B.  FIELDS SEARCHED

Minimum documentation searched (classification system followed by classification symbols)
B65G65/48, B65D90/00

Documentation searched other than minimum documentation to the extent that such documents are included in the fields searched

| Jitsuyo Shinan Koho | 1922-1996 | Jitsuyo Shinan Toroku Koho | 1996-2008 |
|---|---|---|---|
| Kokai Jitsuyo Shinan Koho | 1971-2008 | Toroku Jitsuyo Shinan Koho | 1994-2008 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | CD-ROM of the specification and drawings annexed to the request of Japanese Utility Model Application No. 72355/1992(Laid-open No. 35235/1994)<br>(Osamu YOSHIKAWA),<br>10 May, 1994 (10.05.94),<br>Full text; Figs. 1 to 5<br>(Family: none) | 1-3,5-8<br>4 |
| Y | JP 2002-191289 A  (WMF Wuettembergische Metallwarenfabrik AG.),<br>09 July, 2002 (09.07.02),<br>Par. No. [0016]; Fig. 1<br>& US 2002-0083543 A      & EP 1210894 A<br>& DE 10059183 A | 4 |

☒  Further documents are listed in the continuation of Box C.  ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 June, 2008 (19.06.08) | 01 July, 2008 (01.07.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
|---|
| PCT/JP2008/058722 |

C (Continuation). DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 130131/1979(Laid-open No. 47833/1981) (Yoshio YAMAMOTO), 28 April, 1981 (28.04.81), Full text; Figs. 1 to 7 (Family: none) | 1-8 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001278453 A